# EUROPÄISCHE PATENTSCHRIFT

(11) **EP 1 345 788 B1**
(45) Veröffentlichungstag und Bekanntmachung des Hinweises auf die Patenterteilung: **30.06.2004**
(21) Anmeldenummer: 01995602.8
(22) Anmeldetag: 18.12.2001
(51) Int. Cl.: B60K 6/04

(54) **VERFAHREN ZUM BETRIEB EINES VERBRENNUNGSMOTORS**
METHOD FOR OPERATING AN INTERNAL COMBUSTION ENGINE
PROCEDE POUR FAIRE FONCTIONNER UN MOTEUR A COMBUSTION INTERNE

(30) Priorität: 21.12.2000 DE 10063751
(43) Veröffentlichungstag der Anmeldung: 24.09.2003
(73) Patentinhaber: ROBERT BOSCH GMBH, 70442 Stuttgart (DE)
(72) Erfinder: AHNER, Peter, 71032 Boeblingen (DE); BISANZ, Andreas, 31061 Alfeld (DE); ACKERMANN, Manfred, 71570 Oppenweiler (DE); DEPTNER, Richard, 71701 Schwieberdingen (DE); WESSELS, Siegbert, 31141 Hildesheim (DE); SIEBER, Udo, 74321 Bietigheim (DE)
(86) Internationale Anmeldenummer: PCT/DE2001/004723
(87) Internationale Veröffentlichungsnummer: WO 2002/049868

(56) Entgegenhaltungen:
- EP-A- 0 819 561
- EP-A- 0 904 971
- EP-A- 1 186 753
- WO-A-99/47801
- DE-A- 19 953 856
- FR-A- 2 803 253

## Beschreibung

### Stand der Technik

Die Erfindung geht aus von einem Verfahren zum Betrieb eines in einem Kraftfahrzeug eingebauten Verbrennungsmotors mit gesteuerten Ein- und Auslaßventilen nach dem Oberbegriff des Anspruchs 1.

Bei einem bekannten Verfahren zum Betrieb eines ventilgesteuerten Verbrennungsmotors (DE 196 32 074 A1), an dessen Kurbelwelle eine als sog. Starter-Generator dienende elektrische Maschine kupplungslos angekoppelt ist, werden vor dem Starten bzw. Beschleunigen des Verbrennungsmotors die Ventile von einer Ventilsteuereinheit so verstellt, daß im Verbrennungsmotor praktisch keine Kompression entsteht. Der Starter-Generator kann dann im Motorbetrieb mit relativ kleiner Leistung bei Speisung aus der Batterie über einen Frequenzumrichter die Kurbelwelle des Verbrennungsmotors mit geringer Leistung hochbeschleunigen, wobei der Starter-Generator lediglich das Trägheitsmoment des Verbrennungsmotors und dessen Reibung zu überwinden hat. Das Hochlaufen erfolgt bei gleichzeitig abgeschalteter Zündung bzw. Einspritzung bzw. Gemischaufbereitung. Die Verstellung der Ventile selbst erfolgt in an sich bekannter Weise durch direkte entsprechende Ventilhubsteuerung oder durch entsprechende Veränderung des Steuerwinkels zwischen Nockenwelle und Kurbelwelle. Bei Erreichen einer durch einen Drehzahlsensor erfaßten und an eine Hauptsteuereinheit abgegebenen Mindestdrehzahl des Verbrennungsmotors werden die Ventile über die Ventilsteuereinheit und dem Ventilstellantrieb so verstellt, daß der betriebsmäßige Verbrennungsvorgang nach eingeschalteter Zündung des Verbrennungsmotors eingeleitet wird, wobei die zuvor durch den Starter-Generator in dessen Motorbetrieb aufgebrachte Schwungenergie dazu mithilft, den Verbrennungsmotor kurzzeitig zu starten und zu beschleunigen. Sobald der Verbrennungsmotor gezündet hat, wird der Starter-Generator aus dem Motorbetrieb abgeschaltet und auf Generatorbetrieb umgeschaltet, in dem er die Batterie nachladen kann.

Ein solches Verfahren wird angewandt, um in Betriebsphasen des Verbrennungsmotors ohne Leistungsanforderungen den Verbrennungsmotor abzuschalten oder einen Teil der Verbrennungszylinder ohne Zündung und Kompression nur mitlaufen lassen zu können'und bei erneuter Leistungsanforderung durch Abgeben kinetischer Energie einen Neustart des Verbrennungsmotors einzuleiten. Dies führt zur Reduktion des Kraftstoffverbrauchs und der Emmission von Schadstoffen.

Bei einem bekannten Antriebssystem (EP 0 847 488 B1), das einen Verbrennungsmotor und eine auf dessen Kurbelwelle gekoppelte, zur aktiven Dämpfung von Drehungleichförmigkeiten an der Kurbelwelle des Verbrennungsmotors dienende, elektrische Maschine aufweist, werden sowohl der Verbrennungsmotor als auch die elektrische Maschine von einem Mikrocomputer-Steuergerät gesteuert. Im Rahmen der Steuerung des Verbrennungsmotors übernimmt das Mikrocomputer-Steuergerät folgende Steueraufgaben:
Kraftstoffzufuhrsteuerung, Drosselklappensteuerung, Kraftstoffeinspritz-Steuerung, Zündungssteuerung, Ventilsteuerung, Ladedruckregelung, Abgasrückführsteuerung und Start-Stop-Steuerung. Das Dämpfen der Drehungleichförmigkeiten erfolgt so, daß die elektrische Maschine ein schnell alternierendes, und zwar bei einer positiven Drehungleichförmigkeit ein bremsendes und bei einer negativen Drehungleichförmigkeit ein antreibendes, Drehmoment erzeugt, dem sie zur zusätzlichen Erzielung einer antreibenden Wirkung oder einer bremsenden, generatorischen Wirkung ein positives bzw. negatives Drehmoment überlagert.

Bei einem ebenfalls bekannten Antriebssystem dieser Art (DE 32 27 810 C2), das als Hybridantrieb verwendet wird, ist zwischen der Kurbelwelle des Verbrennungsmotors und der elektrischen Maschine, die als Generator, Startergenerator und/oder Fahrmotor betrieben wird eine zusätzliche, schaltbare Kupplung vorgesehen, um im Schubbetrieb die Motorbremswirkung auf das Fahrzeug auszuschalten und dadurch möglichst viel kinetische Energie des Fahrzeugs zu rekuperieren und an einen Energiespeicher, z.B. die Fahrzeugbatterie, zurückzuspeichern, die Ausrollphase des Fahrzeugs zu verlängern oder in Schwachlastbereichen rein elektrisch fahren zu können.

Das dokument EP 0 904 971 A zeigt die Merkmale des Oberbegriffs des Anspruchs 1.

### Vorteile der Erfindung

Das erfindungsgemäße Verfahren zum Betrieb eines ventilgesteuerten Verbrennungsmotors eines Kraftfahrzeugs hat den Vorteil, daß durch den Eingriff in die Ventilsteuerung die Bremswirkung des Verbrennungsmotors auf das Fahrzueg kontinuierlich reduziert werden kann und so eine höhere Antriebsleistung für die als Generator arbeitende elektrische Maschine zur Verfügung steht, so daß bei der Fahrzeugverzögerung ein hohes Maß an Rekuperationsleistung erreicht und möglichst viel Energie zurückgewonnen und im Energiespeicher abgespeichert werden kann. Eine ähnlich hohe Rekuperationsleistung wird bei dem vorstehend zuletzt beschriebenen bekannten Antriebssystem nur durch Öffnen der zusätzlichen Kupplung und damit durch Trennen des Verbrennungsmotors von der elektrischen Maschine erreicht, wobei die Kupplung einen erhöhten Herstellungsaufwand bedingt und ein zusätzliches, dem Verschleiß unterworfenes Bauteil darstellt. Bei dem erfindungsgemäßen Antriebssystem kann dagegen auf diese Kupplung gänzlich verzichtet werden.

Da das Verzögerungs- oder Bremsverhalten des Fahrzeugs, das nur von dem Bremsmoment der elektrischen Maschine verursacht wird, sich dabei beträchtlich von dem eines herkömmlichen Verbrennungsmotors mit üblicher oder "konventioneller" Ventilsteuerung unterscheidet, wird erfindungsgemäß vom Verbrennungsmotor noch ein Beitrag zur Bremsleistung beigesteuert, so daß sich für den Fahrer des Fahrzeugs beim "Gaswegnehmen" oder Bremsen nach wie vor die vorhersehbare, gewohnte Wirkung einer "Motorbremse" einstellt.

Vorzugsweise wird dabei die Regelung der Bremsleistung des Verbrennungsmotors abhängig von der von der elektrischen Maschine abgegebenen Bremsleistung so durchgeführt, daß die Summe der Bremsleistungen von elektrischer Maschine und Verbrennungsmotor zu jedem Zeitpunkt der Fahrzeugverzögerung der von einem Verbrennungsmotor mit konventioneller Ventilsteuerung abgegebenen Bremsleistung entspricht. Unter konventioneller Ventilsteuerung wird hier die übliche Ventilsteuerung mit durch eine Nockenwelle mit Steuernocken vorgegebenen Öffnungs- und Schließzeitpunkten und Ventilhüben der Ein- und Auslaßventile, einschließlich deren Beeinflussung durch z.B. Verdrehen der Nockenwelle, Umschalten der Nockenwelle und/oder räumliche Profile der Steuernocken und dgl., verstanden.

Mit dem erfindungsgemäßen Verfahren des Eingriffs in die Ventilsteuerung lassen sich darüber hinaus unterschiedliche Anordnungen der elektrischen Maschine zur Kurbelwelle des Verbrennungsmotors realisieren. So muß die elektrische Maschine nicht zwischen Verbrennungsmotor und Fahrkupplung auf der Kurbelwelle angeordnet werden, wie dies bei Starter-Generatoren mit einer zweiten Kupplung zwischen Verbrennungsmotor und elektrischer Maschine zwingend ist. Die elektrische Maschine kann beispielsweise auf der von der Fahrkupplung abgekehrten Seite des Verbrennungsmotors auf der Kurbelwelle angeordnet oder aus dem Antriebstrang des Verbrennungsmotors herausgenommen und über einen Riemenantrieb oder ein Getriebe an die Kurbelwelle angekoppelt werden.

Durch die in den weiteren Ansprüchen aufgeführten Maßnahmen sind vorteilhafte Weiterbildungen und Verbesserungen des im Anspruch 1 angegebenen Verfahrens möglich.

Gemäß einer bevorzugten Ausführungsform der Erfindung erfolgt der Eingriff in die Ventilsteuerung im Sinne einer kontinuierlichen Reduzierung der Öffnungsdauer und/oder des Hubs der Ventile bis hin zu deren Schließen. Durch diese kontinuierliche Steuerung von Öffnungsdauer und/oder Ventilhub der Ventile läßt sich die Brems- oder Schleppleistung des Verbrennungsmotors zwischen den Grenzwerten "konventionelle Ventilsteuerung" und "vollständige Ventilschließung" in der angegebenen Art in einfacher Weise sehr genau steuern. Dabei kann der Eingriff auf die Ein- und Auslaßventile erfolgen, alternativ aber auch nur in die Ventilsteuerung der Einlaßventile in dieser Weise eingegriffen werden. Das dabei erzielbare Rekuperationspotential ist unwesentlich geringer als beim Eingriff auf alle Ventile, dafür aber der Steueraufwand wesentlich geringer. Das Kosten-Nutzen-Verhältnis gestaltet sich beim Eingriff auf die Einlaßventile allein daher sehr viel günstiger.

In einer alternativen Ausführungsform der Erfindung erfolgt der Eingriff in die Ventilsteuerung im Sinne einer gezielten Dekompression des Verbrennungsmotors. Dabei wird die gezielte Dekompression durch Steuerung der Öffnungsdauer und/oder des Hubs der Auslaßventile bewirkt. Da dabei das Druckniveau im Verbrennungszylinder und die damit verbundene Reibung höher sind und ein Teil der zurüchgewonnenen Kompressionsleistung kompensieren, wird eine etwas geringere Rekuperationsleistung erzielt.

Gemäß einer vorteilhaften Ausbildung des erfindungsgemäßen Verfahrens wird die Ventilsteuerung und eine Regelung des Generator- und Motorbetriebs der elektrischen Maschine in Abhängigkeit vom Ladezustand des Energiespeichers, insbesondere der Batterie, durchgeführt, wobei vorzugsweise mindestens vier Stufen des Ladezustands berücksichtigt werden. Wird z.B. bei längerem Schubbetrieb (Bergabfahrten) der Energiespeicher zunehmend voll und kann den von der elektrischen Maschine gelieferten Generatorstrom immer weniger aufnehmen, so erfolgt der Eingriff in die Ventilsteuerung so, daß diese sich zunehmend der oberen Grenze "konventionelle Ventilsteuerung" nähert, die Bremsleistung des Verbrennungsmotors also immer stärker zunimmt. Kann der Energiespeicher wieder Ladestrom aufnehmen, so wird durch kontinuierliche Steuerung der Ventile in Richtung untere Grenze "vollständiges Ventilschließen" das Bremsmoment des Verbrennungsmotors wieder abgesenkt.

Durch das Vorsehen von dabei mindestens vier Stufen des Ladezustand des Energiespeichers, insbesondere des Batterieladezustands, kann eine Aufteilung von Generatorstrom und Ladestrom so erreicht werden, daß auch bei unterschiedlichen Bordnetzlasten der Ladezustand von einem mittleren Pegel wenig abweicht und damit der Energiespeicher im Schubbetrieb ausreichend Generatorstrom aufnehmen kann, um ein geeignetes generatorisches Bremsmoment zur Nachbildung des Abbremsens des Verbrennungsmotors zu erzeugen. Gemäß einer bevorzugten Ausführungsform der Erfindung werden die Ventilsteuerung und die Regelung der elektrischen Maschine mit einem Bremsmanagement des Kraftfahrzeugs verbunden. In diesem wird die vom Fahrer zu aktivierende Betriebsbremse verwendet, doch kann auch ein vorhandenes ABS oder eine Antischlupfregelung (ASR) mit einbezogen werden.

Ein solches Bremsmanagement sieht gemäß einer vorteilhaften Ausführungsform der Erfindung so aus, daß im Schubbetrieb bei von einer Bremspedalbetätigung ausgelöstem, kontinuierlich ansteigendem Bremsdruck die Bremswirkung der Betriebsbremse erst dann einsetzt, wenn sowohl die im Generatorbetrieb arbeitende elektrische Maschine als auch der Verbrennungsmotor ihre maximalen Bremsmomente abgeben und damit die erforderliche Fahrzeugverzögerung nicht erreicht werden kann.

### Zeichnung

Die Erfindung ist anhand von in der Zeichnung dargestellten Ausführungsbeispielen in der nachfolgenden Beschreibung näher erläutert. Es zeigen:
- Fig. 1 und 2: jeweils ein Blockschaltbild einer Einrichtung zum Betrieb eines ventilgesteuerten Verbrennungsmotors eines Kraftfahrzeugs gemäß einem ersten und zweiten Ausführungsbeispiel,
- Fig. 3: verschiedene Zeitdiagramme zur Erläuterung der Ventilsteuerung und der Regelung der elektrischen Maschine in Abhängigkeit vom Batterieladezustand, Gaspedalweg und Bremsdruck sowie der Kopplung mit einer Betriebsbremse,
- Fig. 4 bis 10: jeweils eine schematische Darstellung einer konstruktiven Ausführung eines Ventilstellantriebs mit Ventilsteuerung gemäß sieben verschiedener Ausführungsbeispiele.

### Beschreibung der Ausführungsbeispiele

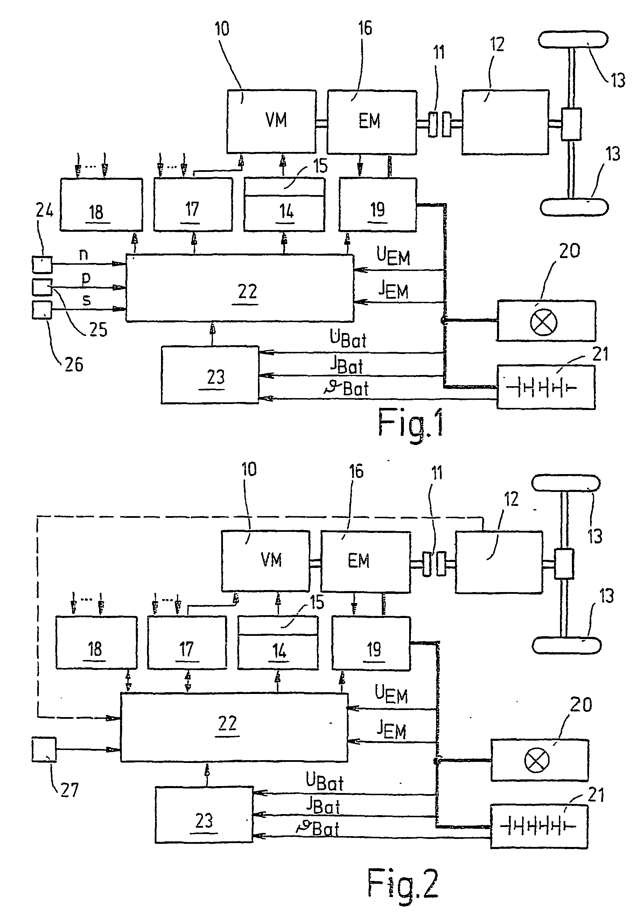

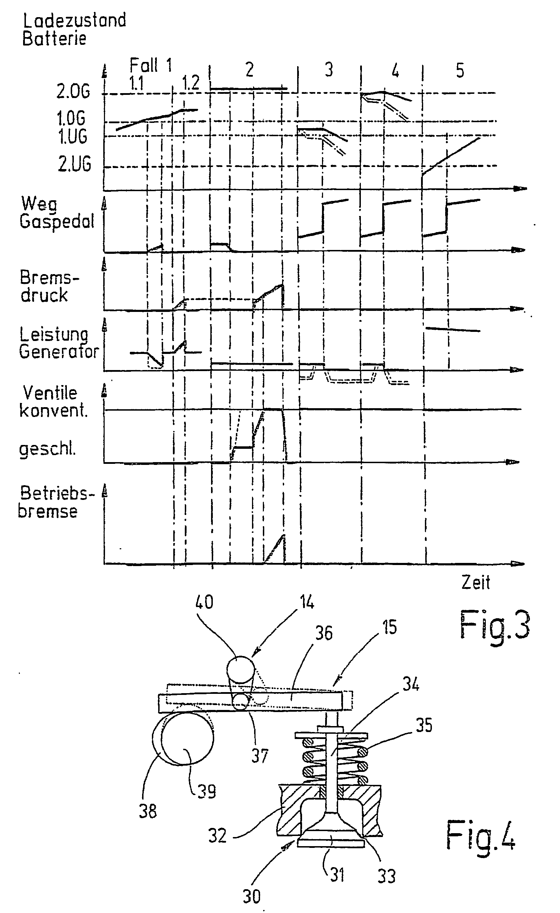

In dem Blockschaltbild der Fig. 1 treibt ein ventilgesteuerter Verbrennungsmotor 10 über eine Fahrkupplung 11 und ein Getriebe 12 Antriebsräder 13 eines Kraftfahrzeugs an. Die bekannten und hier nicht weiter dargestellten Einund Auslaßventile der Verbrennungszylinder des Verbrennungsmotors 10 werden von einer Ventilsteuereinheit 14 über einen die Ventile betätigenden Ventilstellantrieb 15 gesteuert. Wie in Fig. 1 nicht weiter dargestellt, aber aus Fig. 4 - 10 ersichtlich ist, umfaßt der Ventilstellantrieb 15 in bekannter Weise eine Nockenwelle mit Steuernocken, die z.B. auf Schlepp- oder Kipphebel oder Tassenstößel wirken, die ihrerseits über Ventilstößel das zugeordnete Ventil öffnen bzw. schließen, wobei der Öffnungs- und Schließzeitpunkt von der Ventilsteuereinheit 14 vorgegeben und z.B. durch Verändern des Steuerwinkels zwischen Kurbelwelle und von dieser angetriebener Nockenwelle verändert werden. Der Verbrennungsmotor 10 ist fest mit einer elektrischen Maschine 16 gekoppelt, und zwar dadurch, daß die Rotorwelle der elektrischen Maschine 16 drehfest mit der Kurbelwelle des Verbrennungsmotors 10 verbunden ist oder der Rotor der elektrischen Maschine 16 drehfest auf der Kurbelwelle sitzt.

Die Einrichtung zum Betrieb des ventilgesteuerten Verbrennungsmotors 10 umfaßt neben der Ventilsteuereinheit 14 mit Ventilstellantrieb 15 noch eine Steuereinheit 17 für die Motorsteuerung, welche die Kraftstoffzufuhr und die Gemischbildung bzw. die Einspritzung und die Zündung in den einzelnen Verbrennungszylindern des Verbrennungsmotors 10 steuert, eine Steuereinheit 18 für die Betriebsbremse, sowie eine Regeleinrichtung 19 für die elektrische Maschine 16. Mittels der Regeleinrichtung 19 wird der von der elektrischen Maschine 16 erzeugte momentane Generatorstrom auf einen Versorgungsstrom für elektrische Verbraucher 20 und einen Ladestrom für eine elektrische Batterie 21 als Beispiel für einen allgemeinen elektrischen Energiespeicher aufgeteilt.

Eine Hauptsteuereinheit 22 greift auf die einzelnen Steuereinheiten 14, 17 und 18 und auf die Regeleinrichtung 19 zu und erzeugt Steuersignale, die in den einzelnen Steuereinheiten umgesetzt werden. Die Batterie 21 wird von einer Batterieüberwachung 23 bezüglich Batteriestrom I_{Bat}, Batteriespannung U_{Bat} und Batterietemperatur ϑ_{Bat} überwacht und daraus der Ladezustand der Batterie 21 ermittelt, der an die Hauptsteuereinheit 22 übertragen wird. Als weitere Einflußgrößen werden der Hauptsteuereinrichtung 22 der Generatorstrom I_{EM} und die Generatorspannung U_{EM}, der elektrischen Maschine 16 die Drehzahl n des Verbrennungsmotors 10, der vom Fahrer über das Bremspedal erzeugte Bremsdruck p sowie der Gaspedalweg s des vom Fahrer zu betätigenden Gaspedals zugeführt. Die letztgenannten drei Einflußgrößen werden mittels Sensoren 24, 25 und 26 erfaßt und als elektrische Signale an die Hauptsteuereinheit 22 gegeben.

Zwecks Zurückgewinnung der kinetischen Energie des Fahrzeugs (Rekuperation)im Bremsbetrieb und im Schubbetrieb des Verbrennungsmotors vom "Gaswegnehmen" bis hin zur Betätigung der Betriebsbremse durch den Fahrer, wird in dieser Betriebsphase in die konventionelle Ventilsteuerung der Einund Auslaßventile durch die Ventilsteuereinheit 14 über die einzelnen Ventilstellantriebe 15 von der Hauptsteuereinheit 22 derart eingegriffen, daß die Öffnungsdauer und/oder der Ventilhub der Ventile kontinuierlich reduziert werden bis hin zum vollständigen Schließen der Ventile. Dadurch nimmt das vom Verbrennungsmotor im Schubbetrieb erzeugte Bremsmoment kontinuierlich ab und erreicht bei vollständig geschlossen gehaltenen Ventilen ein Minimum. Die kinetische Energie des Fahrzeugs wird nunmehr zum Antreiben der elektrischen Maschine 16 genutzt, die einen entsprechenden Generatorstrom zum Laden der Batterie 21 erzeugt. Gleichzeitig wird durch Eingriff in die Regeleinrichtung 19 der elektrischen Maschine 16 von der Hauptsteuereinheit 22 aus eine Regelung des Generatorstroms der elektrischen Maschine 16 in der Weise bewirkt, daß das von der elektrischen Maschine 16 erzeugte generatorische Bremsmoment der gewohnten Fahrzeugverzögerung durch den Verbrennungsmotor bei konventioneller Ventilsteuerung, also ohne Rekuperation, entspricht.

Inwieweit diese Nachbildung vollständig erreicht wird, hängt von dem Ladezustand der Batterie in der Bremsphase ab, also davon, ob die Batterie den von der elektrischen Maschine 16 erzeugten Generatorstrom vollständig oder nur teilweise aufnehmen kann. Dabei sind zwei Fälle zu unterscheiden, die anhand der Diagramme in Fig. 3 erläutert werden:
Im Fall 1 reicht die Baugröße der elektrischen Maschine 16 aus, um die gewünschte Fahrzeugverzögerung zu erzeugen, und die Batterie 21 hat eine ausreichend freie Ladekapazität, um den bei dieser Fahrzeugverzögerung erzeugten Generatorstrom aufzunehmen.

Im Unterfall 1.1 ist das Bremspedal nicht betätigt und auch das Gaspedal nicht oder nur leicht betätigt. Die Ein- und Auslaßventile sind durch Eingriff der Hauptsteuereinheit 22 in die Ventilsteuerung geschlossen. Die Hauptsteuereinheit 22 steuert in Abhängigkeit von der Motordrehzahl n, dem Bremsdruck p und dem Gaspedalweg s den Generatorstrom der elektrischen Maschine 16 derart, daß das von der elektrischen Maschine 16 abgegebene generatorische Bremsmoment die gewünschte Fahrzeugverzögerung hervorruft. Bei nicht betätigtem Gaspedal ist dabei die von der elektrischen Maschine 16 abgegebene Generatorleistung nahezu konstant und der Generatorstrom lädt die Batterie 21 kontinuierlich auf, wie dies im obersten Diagramm der Fig. 3 zu sehen ist. Wird das Gaspedal leicht betätigt, so wird die Generatorleistung abgeregelt, und entsprechend verringert sich der Ladestrom für die Batterie 21.

Im Unterfall 1.2 wird das Bremspedal leicht betätigt, so daß - wie im Diagramm "Bremsdruck über der Zeit" dargestellt ist - der Bremsdruck langsam ansteigt. Die von der Hauptsteuereinheit 22 über die Regeleinrichtung 19 eingeleitete Generatorstromregelung (Diagramm "Leistung Generator über der Zeit") beginnt mit dem Strom zur Nachbildung der Fahrzeugverzögerung beim Bremsdruck Null und steigert den Strom kontinuierlich bis zur gewünschten Fahrzeugverzögerung.

Um diesen Fall der vollständigen Aufnahme der Rekuperationsleistung durch die Batterie 21 möglichst oft zu realisieren, wird eine Regelung des Generatorbetriebs (und ggf. des Motorbetriebs) der elektrischen Maschine 16 und auch die Ventilsteuerung in Abhängigkeit vom Ladezustand der Batterie 21 durchgeführt. Dabei werden im Ausführungsbeispiel vier Stufen des Ladezustands der Batterie 21 vorgegeben, und zwar eine erste und zweite Untergrenze und eine erste und zweite Obergrenze, wie sie im oberen Diagramm der Fig. 3 eingezeichnet sind. Der Ladezustand der Batterie 21 wird dabei von der Batterieüberwachung 23 erfaßt, die hierzu die Batteriespannung U_{Bat}, den Batteriestrom I_{Bat} und die Batterietemperatur ϑ_{bat} mißt. Das Über- und Unterschreiten der einzelnen Stufen wird von der Batterieüberwachung 23 an die Hauptsteuereinheit 22 gemeldet, die entsprechende Regelvorgänge in der Regeleinrichtung 19 auslöst. Die Regelung der elektrischen Maschine 16 erfolgt dabei in der Weise, daß auch bei unterschiedlichen Bordnetzlasten, also unterschiedlichem Stromverbrauch der elektrischen Verbraucher 20, der Batterieladezustand von einem mittleren Pegel nur wenig abweicht.

Zur Illustration sind in Fig. 3 die Fälle 3, 4 und 5 beispielhaft dargestellt, die alle Fahrzustände außerhalb der Rekuperationsphasen betreffen. Wie in den beiden unteren Diagrammen der Fig. 3 zu sehen ist, ist die Betriebsbremse nicht betätigt und die Ventilsteuerung ist konventionell, d. h. die Hauptsteuereinrichtung 22 beeinflußt nicht die Ventilsteuereinheit 14. Im Falle 3 liegt der Ladezustand der Batterie 21 zwischen der ersten Untergrenze und der ersten Obergrenze. Der Generatorstrom ist so geregelt, daß er die elektrischen Verbraucher 20 gerade versorgt. Wird der Verbrennungsmotor 10 durch Gasgeben auf Vollast gebracht (zweites Diagramm von oben in Fig. 3) so wird der Generatorstrom vorübergehend abgeregelt (viertes Diagramm von oben in Fig. 3). Die Batterie 21 speist Batteriestrom in das Bordnetz (Verbraucher 20) ein, und der Ladezustand der Batterie 21 sinkt. Die Abregelung des Generatorstroms ist entweder durch die Annäherung an die zweite Untergrenze des Batterieladezustands oder durch eine vorgegebene Zeitschranke begrenzt.

Im Falle 4 ist die Batterie 21 vollständig geladen und der Generatorstrom so geregelt, daß das Bordnetz gerade versorgt wird. Überschreitet der Ladezustand der Batterie 21 die zweite Obergrenze, so wird der Generatorstrom abgeregelt und die gesamte Bordnetzleistung aus der Batterie 21 entnommen. Nach Unterschreiten der zweiten Untergrenze des Batterieladezustands (Fall 5) wird der Generator auf maximalen Generatorstrom geregelt, bis sich der Batterieladezustand der ersten Untergrenze nähert, so daß dann wieder Fall 3, wie beschrieben, zum Tragen kommt.

Läßt die elektrische Maschine 16 motorischen Betrieb zu, so erfolgt, wie dies in den Fällen 3 und 4 strichpunktiert eingezeichnet ist, motorischer Betrieb in Vollastphasen vorübergehend und in anderen Betriebsbereichen länger andauernd, wenn sich so der Wirkungsgrad steigern läßt. Bei Unterschreiten der zweiten Untergrenze (Fall 5 in Fig. 3) wird auf motorischen Betrieb verzichtet. Das Zuschalten des Generatorbetriebs oder Abschalten des Motorbetriebs erfolgt kontinuierlich entlang einer vorgegebenen Zeitrampe, wobei Zeitkonstanten eines herkömmlichen Verbrennungsmotors nachgebildet werden.

In dem in Fig. 3 dargestellten Fall 2 hat die Batterie 21 einen Ladezustand erreicht, in dem sie den bei der Rekuperation angebotenen Generatorstrom nicht oder nur teilweise aufnehmen kann. In diesem Fall wird der von der elektrischen Maschine 16 abgegebene Generatorstrom so geregelt, daß die elektrische Maschine 16 ein solches generatorisches Bremsmoment generiert, daß ein Teil der bei konventioneller Ventilsteuerung sich im Schubbetrieb einstellenden Fahrzeugverzögerung nachgebildet wird. Der restliche Teil der Fahrzeugverzögerung wird vom Verbrennungsmotor 10 durch angepaßten, vom eingestellten Gaspedalweg abhängigen Eingriff in die Ventilsteuerung zur Verfügung gestellt. Dabei werden mit abnehmendem Generatorstrom die Ventile so gesteuert, daß das vom Verbrennungsmotor abgegebene Bremsmoment entsprechend ansteigt und mit anwachsendem Generatorstrom die Ventile so gesteuert, daß das vom Verbrennungsmotor abgegebene Bremsmoment entsprechend absinkt. Im Fall 2 ist zunächst das Gaspedal leicht betätigt und das Bremspedal nicht betätigt. Zur Nutzbarmachung der Rekuperationsleistung werden die Ventile vollständig geschlossen. Mit der elektrischen Maschine 16 wird die momentan erforderliche geringe Fahrzeugverzögerung vollständig nachgebildet. Geht das Gaspedal in seine Nichtbetätigungsstellung zurück, so muß die Fahrzeugverzögerung erhöht werden. Die elektrische Maschine 16 kann jedoch kein größeres generatorisches Moment erzeugen, da die Batterie keinen Ladestrom mehr aufnimmt. Durch von der Hauptsteuereinheit 22 ausgelöste kontinuierliche Veränderung von Steuerzeit und/oder Ventilhub der Ein- und Auslaßventile wird ein zusätzliches Motorbremsmoment des Verbrennungsmotors 10 erzeugt, der zusammen mit dem generatorischen Bremsmoment der elektrischen Maschine 16 die gewünschte Fahrzeugverzögerung herbeiführt. Wird noch zur stärkeren Fahrzeugverzögerung vom Fahrer die Bremse betätigt, so steigt der Bremsdruck kontinuierlich an (vgl. Diagramm "Bremsdruck über der Zeit" in Fig. 3). Aufgrund des vom Sensor 25 an die Hauptsteuereinheit 22 gemeldeten Bremsdruckanstiegs werden Steuerzeit bzw. Steuerzeit und Ventilhub der Ein- und Auslaßventile kontinuierlich so verändert, bis bei konventioneller Ventilsteuerung der Verbrennungsmotor sein maximales Bremsmoment abgibt. Der Bremsdruckanstieg führt verzögert dann zum Einsetzen der Bremswirkung der Betriebsbremse, wenn die erforderliche Fahrzeugverzögerung nicht von dem maximalen generatorischen Bremsmoment der elektrischen Maschine 16 und dem maximalen Bremsmoment des Verbrennungsmotors 10 herbeigeführt werden kann. Der Anstieg der Bremswirkung der Betriebsbremse ist in Fig. 3 im untersten Diagramm dargestellt. Mit dieser Kopplung von Ventilsteuerung und Regelung der elektrischen Maschine 16 mit dem Bremsmanagement wird die erforderliche Fahrzeugverzögerung bei maximal möglicher Rekuperation und einem gewohnten Fahrzeugverhalten herbeigeführt.

Die vorstehend beschriebene Regelung für den Fall 2 gilt in gleicher Weise auch dann, wenn die Baugröße der elektrischen Maschine 16 nicht ausreicht, um mit dem generatorischen Bremsmoment die gewünschte Fahrzeugverzögerung vollständig nachzubilden. Auch in diesem Fall wird der verbleibende Teil des erforderlichen Bremsmoments durch Eingriff in die Ventilsteuerung des Verbrennungsmotors 10 und des damit einhergehenden gezielten Einstellens des Motorbremsmoments erzeugt.

Bei allen vorstehend beschriebenen Vorgängen der Regelung der elektrischen Maschine 16 und der Ventilsteuerung des Verbrennungsmotors 10 werden Hysteresen vorgegeben, die abhängig von Werten des Ladezustands der Batterie 21 oder zeitabhängig gewählt werden. Außerdem werden Zeitkonstanten, wie sie bei konventioneller Ventilsteuerung auftreten über die Regelung der elektrischen Maschine 16 und die Ventilsteuerung des Verbrennungsmotors 10 nachgebildet.

Die in Fig. 2 im Blockschaltbild dargestellte modifizierte Einrichtung zum Betrieb des Verbrennungsmotors 10 unterscheidet sich von dem zu Fig. 1 beschriebenen Ausführungsbeispiel dadurch, daß der Hauptsteuereinheit 22 mindestens ein Signal der Motorsteuerung von der Steuereinheit 17, z.B. das Drehzahlsignal oder ein Signal für die Schubabschaltung, d.h. für die Kraftstoffabschaltung im Schubbetrieb, zugeführt wird, das alternativ für den Gaspedalweg zur Steuerung von Ventilsteuereinheit 14 und Regeleinrichtung 19 durch die Hauptsteuereinheit 22 verwendet wird. Auch Signale der Regeleinrichtung 19, z.B. das Drehzahlsignal, können in der Hauptsteuereinheit 22 verarbeitet werden. Außerdem werden von der Steuereinheit 18 für die Betriebsbremse Signale der Bremssteuerung der Hauptsteuereinheit 22 zur Verfügung gestellt. Des weiteren kann der Hauptsteuereinheit 22 das Signal eines Bremslichtschalters 27 zugeführt werden, das bei Betätigung der Betriebsbremse abgegeben wird. Die vorstehend beschriebene Wirkungsweise des Eingriffs in die Ventilsteuerung des Verbrennungsmotors 10 und der Regelung der elektrischen Maschine 16 ist die gleiche, mit dem Unterschied, daß anstelle des Gaspedalwegs Steuersignale aus der Motorsteuerung verwendet werden und bei Verzicht auf den Bremsdrucksensor 25 die Signale der Steuereinheit 18 für die Betriebsbremse ausgenutzt werden. Wenn alternativ für die Bremsdruckberücksichtigung das Signal des Bremslichtschalters 27 verwendet wird, wird bei betätigtem Bremspedal statt der kontinuierlichen Anhebung des Motorbremsmoments das gesamte Motorbremsmoment zugeschaltet. Der Komfort dieser Alternative kann gesteigert werden, wenn über eine zusätzliche Gangerkennung die Ventilsteuerung und die Regelung der elektrischen Maschine 16 durch die Hauptsteuereinheit 22 so modifiziert werden, daß auf eine Rekuperation in den unteren Gängen verzichtet wird. Ein von dem Getriebe 12 abgeleitetes Gangerkennungssignal wird dann über die in Fig. 2 strichliniert dargestellte Signalleitung der Hauptsteuereinheit 22 zugeführt.

Wie vorstehend beschrieben, erfolgt der Eingriff der Hauptsteuereinheit 22 in die Ventilsteuerung der Ventilsteuereinheit 14 sowohl bezüglich der Ein- als auch der Auslaßventile. Es hat sich jedoch gezeigt, daß ein Eingriff auf die Einlaßventile allein ein hohes Rekuperationspotenial nutzbar macht, das unwesentlich geringer ist als beim Eingriff auf alle Ventile, dafür der Steueraufwand aber nicht unwesentlich sinkt. Das Kosten-Nutzen-Verhältnis gestaltet sich beim Eingriff auf die Einlaßventile allein günstiger als beim Eingriff auf alle Ventile.

In Fig. 4 bis 6 sind drei verschiedene Ausführungsbeispiele des Ventilstellantriebs 15 für ein Einlaßventil 30 mit Ventilsteuereinheit 14 dargestellt. Das Einlaßventil 30 weist einen Ventilteller 31, der mit einem im Zylinderkopf 32 des Verbrennungsmotors 10 ausgebildeten Ventilsitz 33 zusammenwirkt, und einen den Ventilteller 31 zur Hubbewegung antreibenden Ventilstößel oder Ventilschaft 34 auf. Der Ventilschaft 34 wird durch eine Ventilschließfeder 35 so belastet, daß der Ventilteller 31 auf dem Ventilsitz 33 aufgepreßt und so das Einlaßventil 30 geschlossen gehalten wird. Der Ventilschaft 34 wird im Ausführungsbeispiel der Fig. 4 durch einen Kipphebel 36 betätigt, der etwa mittig in einem Schwenklager 37 aufgenommen ist, mit seinem einen Hebelende am Stirnende des Ventilschafts 34 und mit seinem anderen Hebelende unter dem Druck der Ventilschließfeder 35 an einem Steuernocken 38 anliegt, der in bekannter Weise mit einer über die Kurbelwelle des Verbrennungsmotors 10 angetriebenen Nockenwelle 39 dreht. Nimmt der Kipphebel 36 die in Fig. 4 ausgezogen dargestellte Stellung ein, so wird mit Drehen der Nockenwelle 39 der Kipphebel 36 durch den Steuernocken 38 kontinuierlich angehoben und abgesenkt, wodurch der Ventilschaft 34 in Fig. 4 mit jeder Umdrehung des Steuernockens 38 einen Hub zum Öffnen und Schließen des Einlaßventils 30 ausübt. Durch Verdrehen der Nockenwelle 39 gegenüber der Kurbelwelle (Steuerwinkeländerung) oder der Steuernocken 38 auf der Nockenwelle 39 können die Zeitpunkte des Öffnens und Schließens des Einlaßventils 30 variiert werden. Man spricht hierbei von konventioneller Ventilsteuerung.

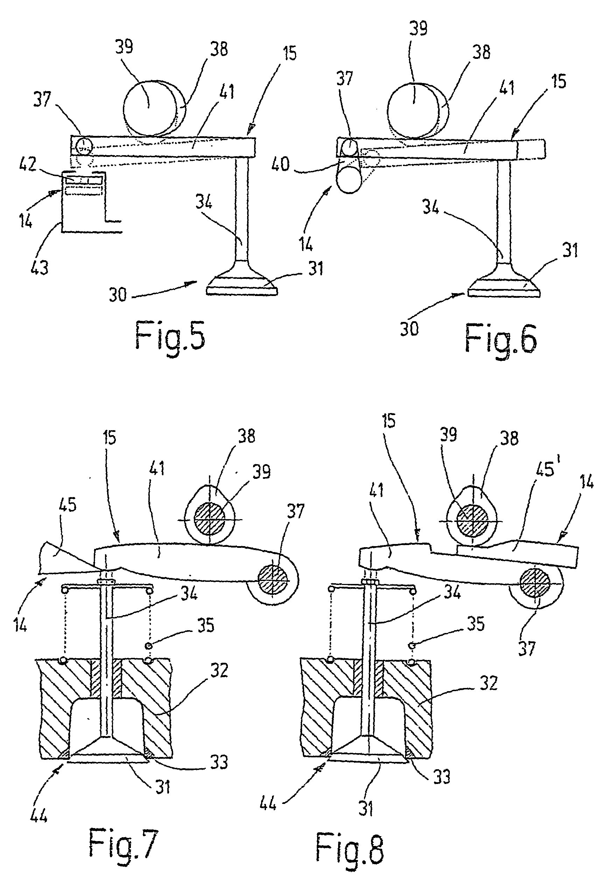

Zum gezielten Eingriff in die Ventilsteuerung ist das Schwenklager 37 des Kipphebels 36 verlagerbar und ist hierzu auf einem schwenkbaren Steuerhebel 40 der Ventilsteuereinheit 14 angeordnet. Durch Verschwenken des Steuerhebels 40 wird das Schwenklager 37 und damit der Kipphebel 36 so verlagert, daß sein in Fig. 4 linker Hebelarm zunehmend von dem Steuernocken 38 abhebt. In der in Fig. 4 punktiert dargestellten Position von Steuerhebel 40, Schwenklager 37 und Kipphebel 36 hat der linke Hebelarm einen solchen Abstand vom Steuernocken 38, daß letzterer den Kipphebel 36 nicht mehr zu verschwenken vermag. In dieser Position bleibt das Einlaßventil 30 während der Rotation des Steuernockens 38 dauerhaft geschlossen. Die Ventilsteuerung hat ihre untere Grenze "vollständiges Ventilschließen" erreicht. Zwischen diesen beiden Extrempositionen des Schwenklagers 37 und des Kipphebels 36 kann die Öffnungsdauer des Einlaßventils 30 und der Ventilhub des Ventilschafts 34 bzw. des Ventiltellers 31 kontinuierlich eingestellt werden, wobei mit zunehmender Verstellung des Schwenklagers 37 aus seiner in Fig. 4 ausgezogen dargestellten Position die Öffnungsdauer des Einlaßventils 30 immer kleiner wird, bis das Einlaßventil 30 in der in Fig. 4 punktierten Position des Schwenklagers 37 geschlossen bleibt. Selbstverständlich ist es möglich, das Schwenklager 37 auch über einen Hydraulikzylinder zu verschieben, wie er nachfolgend zu Fig. 5 beschrieben wird. In Ventilstellantrieben mit sog. Hydrostößeln zur automatischen Ventilspieleinstellung können dann solche Hydraulikzylinder in den Hydrostößeln integriert sein, oder die Hydrostößel werden zur Variation des Ventilhubs modifiziert.

In Fig. 5 ist der Kipphebel 36 des Ventilstellantriebs 15 durch einen Schlepphebel 41 ersetzt, der mit einem Hebelende im Schwenklager 37 schwenkbar festgelegt ist, während sich an seinem anderen Hebelende der Ventilsschaft 34 unter der Wirkung der hier nicht dargestellten Ventilschließfeder 35 kraftschlüssig abstützt. Die Nockenwelle 39 mit Steuernocken 38 greift etwa mittig auf der von dem Ventilschaft 34 abgekehrten Seite des Schlepphebels 41 an. Das Schwenklager 37 des Schlepphebels 41 ist auf einem Steuerkolben 42 angeordnet, der in einem Hydraulikzylinder 43 der Ventilsteuereinheit 14 verschiebbar ist. Nimmt der Schlepphebel 41 seine in Fig. 5 ausgezogen dargestellte Position ein, so wird wiederum das Einlaßventil 30 konventionell durch den Steuernocken 38 der sich drehenden Nockenwelle 39 gesteuert, wobei die Schließ- und Öffnungszeit des Einlaßventils 30 durch die Form des Steuernockens 38 festgelegt ist und durch Verdrehung der Nockenwelle 39 beeinflußt werden kann. Wird das Schwenklager 37 durch Verschieben des Steuerkolbens 42 im Hydraulikzylinder 43 nach unten in die punktiert dargestellte Position verlagert, so kann der Schlepphebel 41 vom Steuernocken 38 nicht mehr betätigt werden, und das Einlaßventil 30 bleibt dauerhaft geschlossen. Durch entsprechende Ansteuerung des Hydraulikzylinders 43 durch die Hauptsteuereinheit 22 kann die Position des Schwenklagers 37 des Schlepphebels 41 kontinuierlich zwischen diesen beiden Endpositionen eingestellt werden, so daß ein kontinuierliches Verändern der Öffnungsdauer und/oder des Ventilhubs des Einlaßventils 30 möglich ist.

Bei dem Stellantrieb 15 in Fig. 6 ist das Schwenklager 37 des Schlepphebels 41 wie beim Kipphebel 36 in Fig. 4 auf einem Steuerhebel 40 der Ventilsteuereinheit 14 angeordnet, der zwischen zwei Endstellungen, die in Fig. 6 ausgezogen und punktiert dargestellt sind, durch entsprechende Steuersignale der Hauptsteuereinheit 22 kontinuierlich verschwenkt werden kann, so daß in gleicher Weise, wie vorstehend beschrieben, der Schlepphebel 41 zwischen den beiden in Fig. 6 ausgezogen und punktiert dargestellten Endpositionen verlagert werden kann. In der punktiert dargestellten Schwenkposition ist der Steuernocken 38 wieder außer Eingriff mit dem Schlepphebel 41, so daß das Einlaßventil 30 geschlossen bleibt.

In einer alternativen Ausführungsform des erfindungsgemäßen Verfahrens wird die Rekuperationsenergie des Verbrennungsmotors 10 in dessen Schub- oder Bremsphase bei Fahrzeugverzögerung dadurch nutzbar gemacht, daß in die Ventilsteuerung im Sinne einer gezielten Dekompression des Verbrennungsmotors 10 eingegriffen wird. Die gezielte Dekompression wird durch Steuerung der Öffnungsdauer und/oder des Hubs der Auslaßventile bewirkt, wobei ausgehend von der konventionellen Ventilsteuerung die Öffnungsdauer und/oder der Hub der Auslaßventile bis hin zum maximal zulässigen Offenhalten während der Schubphase vergrößert wird. Im übrigen kann die gleiche Philosophie zur Ventilsteuerung und Regelung der elektrischen Maschine 16, wie sie vorstehend beschrieben worden ist, angewendet werden.

In Fig. 7 - 10 sind verschiedene Ausführungsbeispiele des Eingriffs in den Ventilstellantrieb 15 eines Auslaßventils 44 durch die Ventilsteuereinheit 14 dargestellt. Das Auslaßventil 44 stimmt im Aufbau mit dem Einlaßventil 30 in Fig. 4 - 6 überein, so daß gleiche Teile mit gleichen Bezugszeichen versehen sind. Der Ventilstellantrieb 15 ist wiederum mit einem Schlepphebel 41 ausgerüstet, der den Ventilschaft 34 beaufschlagt und im Schwenklager 37 schwenkbar gelagert ist. Unter der Kraft der Ventilschließfeder 35 liegt der Schlepphebel 41 am Steuernocken 38 der Nockenwelle 39 an.

In Fig. 7 und 8 wird die gezielte Dekompression des Auslaßventils 44 durch einen Steuerkeil 45 bzw. 45' erreicht, der zwischen dem Ventilschaft 34 und dem Schlepphebel 41 (Fig. 7) bzw. zwischen dem Schlepphebel 41 und dem Steuernocken 38 (Fig. 8) eingeschoben wird. Je nach Größe des Vorschubs des Steuerkeils 45 wird die Größe der Dekompression eingestellt, da das Auslaßventil 44 nicht mehr vollständig zu schließen vermag und in seiner Schließstellung ein mehr oder weniger großer Ringspalt zwischen Ventilteller 31 und Ventilsitz 33 verbleibt.

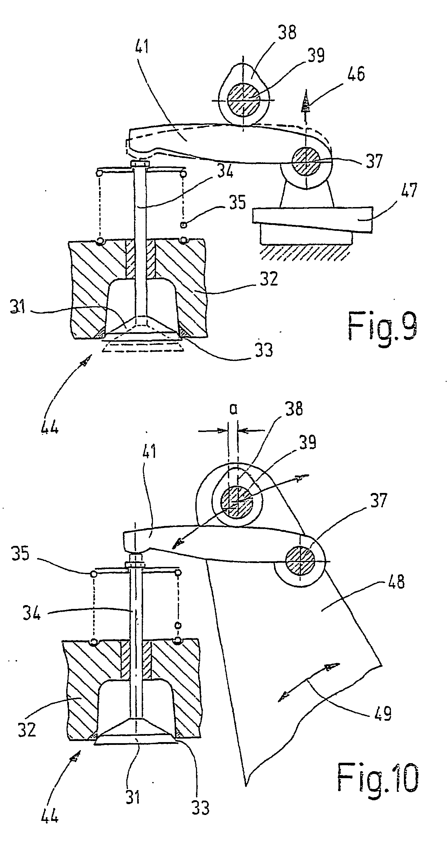

Bei dem in Fig. 9 dargestellten Ausführungsbeispiel des Auslaßventils 44 wird die gezielte Dekompression durch Verlagerung des Schwenklagers 37 des Schlepphebels 41 erreicht, wie dies durch Pfeil 46 angedeutet ist. Eine solche Verschiebung kann beispielsweise durch einen Steuerkeil 47 realisiert werden, der eine vertikale Verschiebung des Schwenklagers 37 bewirkt, so daß der Schlepphebel 41 in die strichliniert angedeutete Position schwenkt und damit in einer Drehstellung des Steuernockens 38, in der normalerweise das Auslaßventil 44 geschlossen ist, nunmehr der Ventilteller 31 vom Ventilsitz 33 abgehoben bleibt. Das Auslaßventil 44 ist geöffnet. Durch die Größe des zwischen Ventilteller 31 und Ventilsitz 33 verbleibenden Ringspalts kann das Maß der Dekompression eingestellt werden.

Im Ausführungsbeispiel der Fig. 10 wird zur gezielten Dekompression die Nockenwelle 39 verlagert. Im Ausführungsbeispiel ist die Nockenwelle 39 auf einem Schwenkhebel 48 drehbar aufgenommen, der um einen kleinen Schwenkwinkel in Richtung Doppelpfeil 49 geschwenkt werden kann. Dadurch kann die Nockenwelle 39 um den Betrag a in Fig. 10 verschoben werden, wodurch in der Schließstellung des Steuernockens 38 der Schlepphebel 41 stärker nach unten vorgespannt wird und über den Ventilschaft 34 eine Öffnung des Auslaßventils 44 bewirkt. Auch hier kann durch den Grad der Schwenkung des Schwenkhebels 48 das Maß der verbleibenden Restöffnung des Auslaßventils 44 eingestellt und damit die Größe der Dekompression bestimmt werden.

Die Erfindung ist nicht auf die beschriebenen Ausführungsbeispiele beschränkt. So kann anstelle des mechanischen Ventilstellantriebs 15 auch jeder andere Ventilstellantrieb, z.B. ein elektronischer oder ein elektrohydraulischer Ventilstellantrieb, verwendet werden. Besonders vorteilhaft ist dabei die Anwendung des erfindungsgemäßen Verfahrens bei einer elektromagnetischen Ventilsteuerung, da sich dabei der gezielte Eingriff in die Ventilsteuerung zur Gewinnung von Rekuperationsleistung besonders einfach gestaltet.

Die Ventilstellantriebe 15 in ihren zu Fig. 4 - 8 beschriebenen Ausführungsbeispielen können wechselseitig sowohl bei der Ventilsteuerung mit kontinuierlichem Schließen der Ein- und Auslaßventile oder der Einlaßventile als auch bei der Ventilsteuerung mit gezielter Dekompression des Verbrennungsmotors und des dazu vorgenommenen kontinuierlichen öffnens der Auslaßventile eingesetzt werden, wozu lediglich die Verstellrichtung invertiert werden muß.

Die Steuerkeile 45 können zudem Anschläge für die Ventilfeder 35 bilden oder stützen sich, anders als in Fig. 8 gezeigt, zwischen Nockenwelle 39 einerseits und Schlepphebel 41,. Kipphebel oder anderen Komponenten am Ventil, z. B. Tassenstößel, andererseits ab.

Des weiteren kann anstelle der Fahrzeugbatterie auch ein anderer Speicher für elektrische Energie, z.B. ein Kondensator, verwendet werden.

## Patentansprüche

1. Verfahren zum Betrieb eines in einem Kraftfahrzeug eingebauten Verbrennungsmotors (10) mit gesteuerten Ein- und Auslassventilen, der mit einer einen elektrischen Energiespeicher, insbesondere eine Batterie (21), ladenden elektrischen Maschine (16) fest gekoppelt ist, wobei im Schub- oder Bremsbetrieb des Verbrennungsmotors (10) zur Gewinnung von Rekuperationsleistung der elektrischen Maschine dessen Schlepp- oder Bremsleistung durch Eingriff in die Ventilsteuerung so geregelt wird, dass ein für den Fahrer des Kraftfahrzeugs gewolmtes Brems- oder Verzögerungsverhalten des kraftfahrzeugs erreicht wird und wobei die Ventilsteuerung und eine Regelung des Generator- und Motorbetriebs der elektrischen Maschine (16) in Abhängigkeit vom Ladezustand, vorzugsweise von mindestens vier Stufen des Ladezustands, des Energiespeichers (21) durchgeführt wird, **dadurch gekennzeichnet, dass** die Ventilsteuerung und die Regelung der elektrischen Maschine (16) mit einem Bremsmanagement des Kraftfahrzeugs gekoppelt werden.

2. Verfahren nach Anspruch 1, **dadurch gekennzeichnet, daß** die Regelung der Bremsleistung des Verbrennungsmotors in Abhängigkeit von der von der elektrischen Maschine (16) abgegebenen elektrischen Bremsleistung so durchgeführt wird, daß die Summe der Bremsleistungen von elektrischer Maschine (16) und Verbrennungsmotor (10) zu jedem Zeitpunkt der Fahrzeugverzögerung der von einem Verbrennungsmotor mit konventioneller Ventilsteuerung abgegebenen Bremsleistung entspricht.

3. Verfahren nach Anspruch 1 oder 2, **dadurch gekennzeichnet, daß** der Eingriff in die Ventilsteuerung im Sinne einer kontinuierlichen Reduzierung der Öffnungsdauer und/oder des Hubs der Ventile bis hin zu deren Schließen erfolgt.

4. Verfahren nach Anspruch 3, **dadurch gekennzeichnet, daß** der Eingriff in die Ventilsteuerung ausschließlich an den Einlaßventilen (30) vorgenommen wird.

5. Verfahren nach Anspruch 1 oder 2, **dadurch gekennzeichnet, daß** der Eingriff in die Ventilsteuerung im Sinne einer gezielten Dekompression des Verbrennungsmotors (10) erfolgt.

6. Verfahren nach Anspruch 5, **dadurch gekennzeichnet, daß** die gezielte Dekompression des Verbrennungsmotors (10) durch Steuerung der Öffnungsdauer und/oder des Hubs der Auslaßventile (44) bewirkt wird.

7. Verfahren nach Anspruch 1 oder 3 oder 4, **dadurch gekennzeichnet, daß** im Schubbetrieb bei ausreichend freier Ladekapazität des Energiespeichers (21) die Ventile geschlossen werden und daß der von der elektrischen Maschine (16) abgegebene Generatorstrom so geregelt wird, daß die elektrische Maschine (16) ein solches generatorisches Bremsmoment generiert, daß eine bei konventioneller Ventilsteuerung sich im Schubbetrieb einstellende Fahrzeugverzögerung nachgebildet wird.

8. verfahren nach Anspruch 1 oder 3 oder 4, **dadurch gekennzeichnet, daß** im Schubbetrieb bei begrenzter freier Ladekapazität des Energiespeichers (21) der von der elektrischen Maschine (16) abgegebene Generatorstrom so geregelt wird, daß die elektrische Maschine (16) ein solches generatorisches Bremsmoment generiert, daß ein Teil einer bei konventioneller Ventilsteuerung sich im Schubbetrieb einstellenden Fahrzeugverzögerung nachgebildet wird, und daß der restliche Teil der Fahrzeugverzögerung vom Verbrennungsmotor (10) durch angepaßten, vom eingestellten Gaspedalweg abhängigen Eingriff in die Ventilsteuerung generiert wird.

9. Verfahren nach Anspruch 8, **dadurch gekennzeichnet, daß** mit abnehmendem Generatorstrom die Ventile so gesteuert werden, daß das vom Verbrennungsmotor (10) abgegebene Bremsmoment entsprechend ansteigt, und mit anwachsendem Generatorstrom die Ventile so gesteuert werden, daß das vom Verbrennungsmotor (10) abgegebene Bremsmoment entsprechend absinkt.

10. Verfahren nach einem der Ansprüche 7 - 9, **dadurch gekennzeichnet, daß** die Ventilsteuerung und die Regelung des Generator- oder des Motorbetriebs der elektrischen Maschine (16) abhängig von Motordrehzahl, Gaspedalweg und Bremsdruck durchgeführt wird.

11. Verfahren nach einem der Ansprüche 7 - 10, **dadurch gekennzeichnet, daß** zur Ventilsteuerung und Regelung der elektrischen Maschine (16) mindestens ein von einer Steuerung einer Betriebsbremse des Kraftfahrzeugs oder von einem Bremslichschalter (27) abgeleitetes Signal verwendet wird.

12. Verfahren nach einem der Ansprüche 7 - 11, **dadurch gekennzeichnet, daß** zur Ventilsteuerung und Regelung der elektrischen Maschine (16) mindestens ein von einer Steuerung für Gemisch und/oder Zündung des Verbrennungsmotors abgeleitetes Signal verwendet wird.

13. Verfahren nach Anspruch 11 oder 12, **dadurch gekennzeichnet, daß** zur Ventilsteuerung und Regelung der elektrischen Maschine (16) mindestens ein aus einer Gangerkennung des Fahrzeugsgetriebes (12) abgeleitetes Signal verwendet wird.

14. Verfahren nach einem der Ansprüche 1 - 13, **dadurch gekennzeichnet, daß** im Schubbetrieb bei kontinuierlich ansteigendem, von einer Bremspedalbetätigung ausgelöstem Bremsdruck die Bremswirkung einer Betriebsbremse erst bei Erreichen des maximalen Bremsmoments der im Generatorbetrieb arbeitenden elektrischen Maschine (16) und des maximalen Bremsmoments des Verbrennungsmotors (10) aktiviert wird.

15. Verfahren nach einem der Ansprüche 1 - 14, **dadurch gekennzeichnet, daß** Umschaltvorgänge in der Ventilsteuerung und der Regelung der elektrischen Maschine (16) mit Hysteresen erfolgen, die von dem Ladezustand des Energiespeichers (21) abhängig oder zeitabhängig sind.

16. Verfahren nach einem der Ansprüche 1 - 15, **dadurch gekennzeichnet, daß** bei der Ventilsteuerung und/oder der Regelung der elektrischen Maschine (16) Zeitkonstanten im Fahrverhalten eines mit konventioneller Ventilsteuerung betriebenen Verbrennungsmotors (10) nachgebildet werden.

17. Verfahren nach einem der Ansprüche 1 - 16, **dadurch gekennzeichnet, daß** zum Eingriff in die Ventilsteuerung die Schwenklager (37) von Ventilschäfte (34) der Ventile (30; 41) betätigenden Kipp- oder Schlepphebeln (36, 41) oder die Lagerung einer Steuernocken (38) zum Betätigen der Kipp- oder Schlepphebel (36; 41) tragenden Nockenwelle (39) durch mechanische, pneumatische oder hydraulische Mittel verlagert, z.B. verschwenkt oder verschoben, werden.

18. Verfahren nach Anspruch 17, **dadurch gekennzeichnet, daß** zur mechanischen Verlagerung Verstellkeile (45, 45'), die zwischen den Ventilschäften (34) und Kipp- oder Schlepphebeln (41) oder zwischen Kipp- oder Schlepphebeln (41) und Steuernocken (38) eingeschoben werden, oder Schwenkhebel (40; 48) verwendet werden, auf denen die Schwenklager (37) der Kipp- oder Schlepphebel (36; 41) angeordnet sind oder die Nockenwelle (39) gelagert ist.

## Claims

1. Method for operating an internal combustion engine (10) installed in a motor vehicle and having controlled inlet and outlet valves, which is firmly coupled to an electrical machine (16) charging an electrical energy accumulator, in particular a battery (21), wherein, to obtain recovery power for the electrical machine, with the internal combustion engine (10) operating in the overrun or braking mode, with a drag or brake power of the latter being regulated by action on the valve control, in such a way that a braking or deceleration behaviour of the motor vehicle to which the driver of the motor vehicle is accustomed is achieved, and wherein the valve control and regulation of the generator and motor operating mode of the electrical machine (16) are carried out as a function of the charging state, preferably of at least four steps of the charging state, of the energy accumulator (21), **characterized in that** the valve control and the regulation of the electrical machine (16) are coupled to a brake management of the motor vehicle.

2. Method according to Claim 1, **characterized in that** the regulation of the brake power of the internal combustion engine is carried out as a function of the electrical brake power output of the electrical machine (16), in such a way that the sum of the brake powers of the electrical machine (16) and the internal combustion engine (10) corresponds, at any time in the vehicle deceleration, to the brake power output of an internal combustion engine with a conventional valve control.

3. Method according to Claim 1 or 2, **characterized in that** the action on the valve control takes place with the effect of a continuous reduction in the opening duration and/or in the stroke of the valves up to the closing of the latter.

4. Method according to Claim 3, **characterized in that** the action on the valve control is carried out solely by the inlet valves (3).

5. Method according to Claim 1 or 2, **characterized in that** the action on the valve control takes place with effect of a controlled decompression of the internal combustion engine (10).

6. Method according to Claim 5, **characterized in that** the controlled decompression of the internal combustion engine (10) is brought about by the control of the opening duration and/or of the stroke of the outlet valves (44).

7. Method according to Claim 1 or 3 or 4, **characterized in that**, in the overrun operating mode, with a sufficiently free charging capacity of the energy accumulator (21), the valves are closed, and **in that** the generator current output of the electrical machine (16) is regulated in such a way that the electrical machine (16) generates a generative braking torque such that a vehicle deceleration occurring in the overrun operating mode in the case of a conventional valve control is copied.

8. Method according to Claim 1 or 3 or 4, **characterized in that**, in the overrun operating mode, with a limited free charging capacity of the energy accumulator (21), the generator current output of the electrical machine (16) is regulated in such a way that the electrical machine (16) generates a generative braking torque such that part of a vehicle deceleration occuring in the overrun operating mode in the case of a conventional valve control is copied, and **in that** the remaining part of the vehicle deceleration is generated by the internal combustion engine (10) as a result of adapted action on the valve control, the said action being dependent on the set accelerator pedal travel.

9. Method according to Claim 8, **characterized in that**, with a decreasing generator current, the valves are controlled in such a way that the braking torque output of the internal combustion engine (10) rises correspondingly, and, with an increase in generator current, the valves are controlled in such a way that the braking torque output of the internal combustion engine (10) falls correspondingly.

10. Method according to one of Claims 7-9, **characterized in that** the valve control and the regulation of the generator or motor operating mode of the electrical machine (16) are carried out as a function of the engine rotational speed, accelerator pedal travel and brake pressure.

11. Method according to one of Claims 7-10, **characterized in that** at least one signal derived from the control of the service brake of the motor vehicle or from the stop-light switch (27) is used for the valve control and the regulation of the electrical machine (16).

12. Method according to one of Claims 7-11, **characterized in that** at least one signal derived from a control of a mixture and/or the ignition of the internal combustion engine is used for the valve control and regulation of the electrical machine (16).

13. Method according to Claim 11 or 12, **characterized in that** at least one signal derived from a gear detection of the vehicle transmission (12) is used for the valve control and the regulation of the electrical machine (16).

14. Method according to one of Claims 1-13, **characterized in that**, in the overrun operating mode, with a continuously rising brake pressure triggered by a brake pedal actuation, the braking action of a service brake is activated only when the maximum braking torque of electrical machine (16) operating in the generator mode and the maximum braking torque of the internal combustion engine (10) are reached.

15. Method according to one of Claims 1-14, **characterized in that** the changeover operations in the valve control and in the regulation of the electrical machine (16) take place with hystereses which are dependent on the charging state of the energy accumulator (21) or are time-dependent.

16. Method according to one of Claims 1-15, **characterized in that**, in the valve control and/or the regulation of the electrical machine (16), time constants in the driving behaviour of an internal combustion engine (10) operated with the conventional valve control are copied.

17. Method according to one of Claims 1-16, **characterized in that**, for. the action on the valve control, the pivot bearings (37) of the rocker or drag levers (36, 41), which actuate valve stems (34) of the valves (30; 41), or the mounting of the camshaft (39), which carries control cams (38) for actuating the rocker or drag levers (36; 41), are displaced, for example pivoted or shifted, by mechanical, pneumatic or hydraulic means.

18. Method according to Claim 17, **characterized in that**, for mechanical displacement, adjusting keys (45, 45') are used, which are pushed in between the valve stems (34) and the rocker or drag levers (41) or in between the rocker or drag levers (41) and the control cams (38), or pivoting levers (40; 48) are used, on which the pivot bearings (37) of the rocker or drag levers (36; 41) are arranged or the camshaft (39) is mounted.

## Revendications

1. Procédé pour faire fonctionner un moteur à combustion interne (10) monté sur un véhicule, comportant des soupapes d'admission et d'échappement commandées, qui est couplé solidairement avec une machine électrique (16) chargeant un accumulateur d'énergie électrique, en particulier une batterie (21), selon lequel, pour obtenir une puissance de récupération de la machine électrique dans le fonctionnement en poussée ou en freinage du moteur à combustion interne (10), la puissance de traction ou de freinage de celui-ci est régulée par intervention dans la commande des soupapes de façon à obtenir un comportement de freinage ou de décélération habituel pour le conducteur du véhicule, et la commande des soupapes et une régulation du fonctionnement du générateur et du moteur de la machine électrique (16) sont effectuées en fonction de l'état de charge, de préférence d'au moins quatre étages de l'état de charge, de l'accumulateur d'énergie (21),
**caractérisé en ce que**
la commande des soupapes et la régulation de la machine électrique (16) sont couplées avec une gestion du freinage du véhicule.

2. Procédé selon la revendication 1,
**caractérisé en ce que**
la régulation de la puissance de freinage du moteur à combustion interne est effectuée, en fonction de la puissance électrique de freinage produite par la machine électrique (16), de façon que la somme des puissances de freinage de la machine électrique (16) et du moteur à combustion interne (10) corresponde, à chaque moment de la décélération du véhicule, à la puissance de freinage produite par un moteur à combustion interne avec commande conventionnelle des soupapes.

3. Procédé selon la revendication 1 ou 2,
**caractérisé en ce que**
l'intervention dans la commande des soupapes se produit sous forme d'une réduction continue de la durée d'ouverture et/ou de la levée des soupapes jusqu'à leur fermeture.

4. Procédé selon la revendication 3,
**caractérisé en ce que**
l'intervention dans la commande des soupapes est effectuée exclusivement sur les soupapes d'admission (30).

5. Procédé selon la revendication 1 ou 2,
**caractérisé en ce que**
l'intervention dans la commande des soupapes se produit sous forme d'une décompression appropriée du moteur à combustion interne (10).

6. Procédé selon la revendication 5,
**caractérisé en ce que**
la décompression appropriée du moteur à combustion interne (10) est produite par la commande de la durée d'ouverture et/ou de la levée des soupapes d'échappement (44).

7. Procédé selon la revendication 1 ou 3 ou 4,
**caractérisé en ce qu'**
en fonctionnement en propulsion, si la capacité libre de charge de l'accumulateur d'énergie (21) est suffisante, les soupapes se ferment, et le courant de générateur produit par la machine électrique (16) est régulé pour que la machine électrique (16) génère un couple de freinage générateur tel qu'il se produit une décélération du véhicule comparable à celle d'un fonctionnement en poussée avec une commande conventionnelle des soupapes.

8. Procédé selon la revendication 1 ou 3 ou 4,
**caractérisé en ce qu'**
en fonctionnement en poussée, si la capacité libre de charge de l'accumulateur d'énergie (21) est limitée, le courant de générateur produit par la machine électrique (16) est régulé de manière que la machine électrique (16) génère un couple de freinage générateur tel qu'une partie de la décélération du véhicule est comparable à celle d'un fonctionnement en poussée avec une commande conventionnelle des soupapes, et que la partie restante de la décélération du véhicule est générée par le moteur à combustion interne (10) par une intervention adaptée, dépendant de la course réglée de l'accélérateur, dans la commande des soupapes.

9. Procédé selon la revendication 8,
**caractérisé en ce que**
lorsque le courant de générateur diminue, les soupapes sont commandées de manière que le couple de freinage produit par le moteur à combustion interne (10) augmente en conséquence et, lorsque le courant de générateur augmente, les soupapes sont commandées de manière que le couple de freinage produit par le moteur à combustion interne (10) diminue en conséquence.

10. Procédé selon l'une des revendications 7 - 9,
**caractérisé en ce que**
la commande des soupapes et la régulation du fonctionnement du générateur ou du moteur de la machine électrique (16) sont réalisées en fonction du régime du moteur, de la course de l'accélérateur et de la pression de freinage.

11. Procédé selon l'une des revendications 7 - 10,
**caractérisé en ce que**
pour la commande des soupapes et la régulation de la machine électrique (16), au moins un signal émis par une commande d'un frein de service du véhicule ou par un interrupteur de feux stop (27) est utilisé.

12. Procédé selon l'une des revendications 7 - 11,
**caractérisé en ce que**
pour la commande des soupapes et la régulation de la machine électrique (16), au moins un signal émis par une commande pour mélange et/ou allumage du moteur à combustion interne est utilisé.

13. Procédé selon la revendication 11 ou 12,
**caractérisé en ce que**
pour la commande des soupapes et la régulation de la machine électrique (16), au moins un signal émis à partir d'une détection d'un rapport de la boîte de vitesses (12) du véhicule est émis.

14. Procédé selon l'une des revendications 1 - 13,
**caractérisé en ce qu'**
en fonctionnement en poussée, si la pression de freinage déclenchée par un actionnement de la pédale de frein augmente en continu, l'action de freinage d'un frein de service est activée seulement à l'obtention du couple maximal de freinage de la machine électrique (16) fonctionnant en mode de générateur ainsi que du couple de freinage maximal du moteur à combustion interne (10).

15. Procédé selon l'une des revendications 1 - 14,
**caractérisé en ce que**
les opérations d'inversion dans la commande des soupapes et la régulation de la machine électrique (16) sont effectuées avec des hystérésis qui sont fonction de l'état de charge de l'accumulateur d'énergie (21) ou fonction du temps.

16. Procédé selon l'une des revendications 1 - 15,
**caractérisé en ce que**
lors de la commande des soupapes et/ou de la régulation de la machine électrique (16), on imite des constantes de temps dans le comportement à la marche d'un moteur à combustion interne (10) fonctionnant avec commande conventionnelle des soupapes.

17. Procédé selon l'une des revendications 1 - 16,
**caractérisé en ce que**
pour l'intervention dans la commande des soupapes, les paliers pivotants (37) des culbuteurs ou leviers d'entraînement (36, 41) actionnant les tiges (34) des soupapes (30, 41), ou le logement d'un arbre à cames (39) portant des cames de commande (38) pour l'actionnement des culbuteurs ou leviers d'entraînement (36, 41) sont déplacés, par exemple pivotés ou décalés par des moyens mécaniques, pneumatiques ou hydrauliques.

18. Procédé selon la revendication 17,
**caractérisé en ce que**
pour le déplacement mécanique, on utilise des cales de réglage (45, 45') qui sont insérées entre les tiges (34) des soupapes et les culbuteurs ou leviers d'entraînement (41), ou entre les culbuteurs ou leviers d'entraînement (41) et les cames de commande (38), ou des leviers pivotants (40, 48), sur lesquels sont disposés les paliers pivotants (37) des culbuteurs ou leviers d'entraînement (36, 41), ou l'arbre à cames (39).
